# EUROPEAN PATENT SPECIFICATION

(11) **EP 1 755 478 B1**
(45) Date of publication and mention of the grant of the patent: **08.09.2010**
(21) Application number: 05761504.9
(22) Date of filing: 15.06.2005
(51) Int. Cl.: A61C 7/00

(54) **PRESCRIBED ORTHODONTIC ACTIVATORS**
VORGEGEBENE ORTHODONTISCHE AKTIVATOREN
ACTIVATEURS ORTHODONTIQUES PRESCRITS

(30) Priority: 18.06.2004 US 581120 P
(43) Date of publication of application: 28.02.2007
(73) Proprietor: DENTSPLY International Inc., York, PA 17405-0872 (US)
(72) Inventor: SCHULTZ, Charles, J., West Babylon, NY 11704 (US)
(74) Representative: Hartz, Nikolai
(86) International application number: PCT/US2005/021180
(87) International publication number: WO 2006/009747

(56) References cited:
- US-A1- 2002 025 503
- US-A1- 2003 207 227
- US-A1- 2004 023 183
- US-B1- 6 413 086

## Description

### Background of the Invention

The present invention is related to an improved method to create near invisible orthodontic activators and improved removable treatment in orthodontics.

A method of treating a patient by scanning the patient's masticatory system is known from US 2003/0 207 227 on which the preamble of claim 1 is based

Orthodontics relates to creating space and moving the teeth within that space, traditionally using appliances, wires, and some form of ligation, know as braces. This is a highly labor intensive system requiring frequent reactivations by the orthodontist to change and manipulate wieres. These braces are mounted to the teeth using an adhesive/acid system that is uncomfortable for some patient and time consuming for the professional. The appearance of the braces and their profile, can be troublesome for certain patients, especially female adults. It is also expensive.

Several years ago, Align Technology introduced treating patients, mainly adults, with a computer designed series of trays. These trays take the original impression of the patient's teeth and use a digital database to create an actual mold of the teeth and then advance that mold's information to create a series of trays that attempt to treat the patient's malocclusion without fixed braces. This has proven very expensive and time consuming, as it requires the long lead times to start treatment and it takes the plastic trays a longer period of time to affect tooth movement. Busy adults have to be patient and carefully follow the regimen and the orthodontist/manufacturer often has to recreate the series of trays as they need a mid course correction due to either non-compliance or errors in the computer assumptions. While the patient has virtually invisible treatment, it may take years to complete and generally involves a big compromise when compared to traditional treatment. It is also more expensive than fixed braces. While it is more comfortable, it still entails manipulation by the professional to improve the trays, called aligners, performance. Rather than increased chair time, more time is spent on email and telephone consultations with the manufacturer. The flaw in that system is the process used to diagnose the problem and then create the aligners. The subject of this application then is an improved diagnostic process called prescribed set up and prescribed models that lead to better formed trays, an improved forming system, and an improved material to form the trays from, and greater accuracy of the end product to correct the malocclusions.

It is estimated that there are millions of patients that want their anterior teeth corrected, refuse braces, and can't afford the above system. Some of them turn to dental laminates to cosmetically cover the problem but these also are expensive and need to be replaced periodically. It is then important that a system be designed that is less costly than the InvisAlign System, does not entail adhering braces to the teeth, but that can correct the visible teeth that may be misaligned using a nearly invisible plastic activator system to satisfy the needs of the above patients.

Tooth positioners made of clear plastic were developed over 50 years ago to guide teeth near their treatment goal after fixed therapy. Digital imaging in orthodontics was presented early in USP 5,605,459. Ormco describes manipulating digital images of teeth for creating braces in 5,533,895 and other previous patents.

Laser scanning to produce a 3D model of the teeth in 5,338,198 and 5,452,219. Digital manipulation is described in 5,607,305 and 5,587,912.

### Brief Summary of the Invention

This application is a system to orthodontically correct teeth without changing the bite using clear activators based on more accurate information. Typically, the main concern is overlapped or severely rotated anterior teeth that are blocked out of the arch due to space. This system will anticipate that problem, and diagnostically measure the arch and the teeth therein in order to determine where the professional can reduce the enamel without effecting the bite while improving the inter-arch relationship and creating a path for these blocked out teeth to be corrected. This is done via working first with a prescribed set up model, versus the patient's current condition, and creating an ideal prescribed model digitally or manually, from which prescribed activators can be produced to provide more efficacious results for the patient and the doctor.

### Detailed Description of the Invention

The invention is as claimed in claim 1 and does not include methods of treatment of the human or animal body by surgery.

In this application, a patient visits the professional requesting invisible orthodontics and does not want fixed appliances due to their perceived health and social status. The doctor informs them of this system and takes a digital intraoral scan of the teeth and a bite registration, and sends it to the computer aided design company, such as OrthoCAD of Carlstadt, New Jersey. OraMetrix of Dallas, Texas now has a digital scanner and OrthoCAD is ready to introduce one by the end of 2004. In the manual system, the doctor would take an impression using alginate or PVS and a bite registration and sends it to an orthodontic lab, such as GAC OrthoWorks Lab in Racine, Wisconsin. The lab would create a plaster or stone model of the teeth from the impression and then align the upper and lower arches to study the bite position.

The CAD Company would import the digital scan into a 3D virtual modeling software system, available with OrthoCAD or OrthoSmile. The CAD system would create a digital 3D model and align the arches based on the registration.

Next, in the digital embodiment, measurements would be taken to discover if there is an arch width discrepancy and if any of the teeth are unusually wide due to genetic malformation. It also would compute the arch length needed to fit the malposed teeth into the arch and then digitally compute the space needed.

The next step would be to compute which teeth are best for enamel reduction and at what degree to maintain dental health and create space. Path analysis then would be performed. The teeth would be digitally morphed to the ideal position and path analysis for obstructions judged. One cannot correct the malocclusion without a clear path to move the teeth. With traditional orthodontics, this can be aided with distal driving and rotation of the molars but this is impossible for aesthetic treatment. The OrthoCAD program can already perform tooth movement but path analysis is not included. The applicant would jointly develop this with OrthoCAD based on path analysis now used in software for redesign in biomedical research. Once the obstructions are observed, it will measure the amount of space needed to remove the obstruction. Using this analysis with the arch analysis, the enamel would be reduced on the most malformed teeth to create the space for ideal path creation. Enamel reduction would ideally be created using the Intensiv electric saws, available through GAC, that are very accurate and safer for doctors and patients.

Once the projected reductions are programmed into the virtual original arch and ideal arch, they are now the prescribed arches and the ideal prescribed arches. With the ideal prescribed arches, the information could be downloaded to a rapid prototyping machine, as adapted for orthodontics by Glenroe Technologies of Bradenton, Florida. This would create an actual prescribed model that could be used for forming a plastic tray using a thermo-vacuum machine, such as the Drufumat, available through GAC. This uses 3 atmospheres of pressure and heat to form the plastic more accurately than most competing equipment yet is relatively inexpensive when compared to other equipment such as Great Lakes BioStar (Buffalo, New York), but the BioStar could be used.

Using the prescribed model, the first tray would be formed and sent to the customer, the professional, along with the digital analysis used, the prescription for enamel reduction, and the virtual current model, the prescribed model, and the ideal prescribed model for any alterations unknown due to the patient's health condition, or I approval as is by the professional. The professional would then reduce the enamel as prescribed using the Intensiv type system, and insert the first prescribed tray to preserve the space created.

Once approval or the alternations have been made and approved, a series of plastic activators would be produced that would take the dentition from the prescribed model to the ideal prescribed model. The plastic recommended is the DuraTray from GAC where the thickness increases from the edge to the middle, so that as the plastic slumps as it is heated, it retains more of its original gauge, making it more durable and delivering more dental activation per tray.

The number of activators and time of wear would be diagnosed based on the limitations of the material and distance to be moved via the path analysis program that could measure the interim steps. This would be imprinted on a frangibly attached tab that would note the date indicated for use and the patient ID number sent by the professional. The professional would receive the set of activators and then explain the treatment program to the patient. Since any changes are programmed in and the superior plastic is more durable and active, it is anticipated that the amount of activators versus aligners would be cut nearly in half, and the corrections in office would be virtually eliminated, and mid-course corrections limited only to lack of cooperation or some trauma unanticipated.

The professional need only monitor the wear of the retainer and the hygiene of the patient. This reduction in chair time should allow the professional to treat more patients, and more patients to avail truly aesthetic correction at a cost similar to fixed appliances. It should eliminate the vast majority of mid-course corrections and the extra time and trouble it takes.

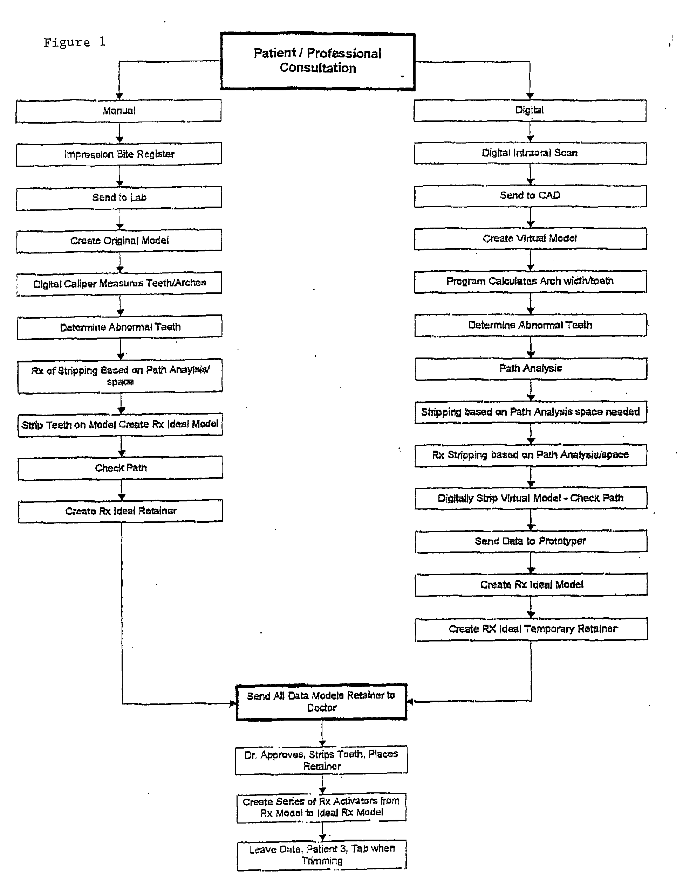

Fig. 1 is a flowchart of the inventive method as herein described. The term "Rx" means "prescription."

Also according to the invention, a series of mailings are made to existing patients with motivational messages to cooperate and referral letters to locate new potential patients. While not all patients need to be treated this way, it would give more self-conscience patients a way to improve their appearance with more satisfactory results.

Generally, this process is to address the millions of adults that are at or near Class I or Class II division I molar relationships and have crowded anteriors. Also, many patients that already completed orthodontic treatment in their youth and simply need to correct unattractive rotations could benefit from this system. This system will not work with Class III treatment and many Class II Division II malocclusions.

## Claims

1. A method of orthodontically correcting malposed teeth which is either
(A) a method comprising the step of
a. making an impression or scan of the patient's teeth that is used to create a 3D digital or positive mold of the original teeth, which is **characterized by** the steps of
b. sending said mold/impression/scan to a lab that measures the teeth and the total width of each arch and calculates tooth and arch irregularities and size distribution;
c. determining where there are path interferences to tooth movement that must be resolved by enamel reduction;
d. determining which teeth are the teeth to be reduced in each arch to clear interferences;
e. digitally or physically removing the proposed reductions from the teeth prescribed and creating a base line prescriptive model and trays;
f. using a CAD or manual system to determine the desired teeth positioning of the prescribed arches;
g. cutting the teeth on the prescribed model and setting them in an ideal prescribed position; and
h. creating an ideal end prescribed model and at least one prescribed progress model; or which is
(B) a method of orthodontically correcting a patient's malposed teeth by a professional comprising the step of
a. making an initial scan or dental impression of the patient's malocclusion that can be used to create a 3D digital or positive physical model; which is **characterized by** the steps of
b. using a computer analysis program to determine the tooth and arch widths and computing any irregularities where enamel reduction is first indicated;
c. digitally or physically reducing said enamel to correct arch and tooth irregularities and clear any interferences;
d. using the initial model to digitally create an ideal prescribed model using a CAD system or by preparing a physical model;
e. using path analysis digitally or physically to determine intermittent digital or physical models as needed;
f. sending the digital original, prescribed enamel reductions sites and sizes, arch and tooth analysis, initial prescribed model, and any intermittent models or physical models, and the final prescribed model to the dental professional for reference, input, and approval; and,
g. creating trays using the prescribed models from an elastic polymeric substance that will be by the used to correct the malocclusion,
except for a method for treatment of the human body by surgery.

2. A method (A) as in claim 1 comprising digitally scanning an impression to create a digital model that will be used to create a physical model via 3-D modeling equipment.

3. A method (A) as in claim 1 where a CAD system takes the digital scan and determines where there are path interferences and calculates the ideal method for clearing them using digital calipers and software for tooth analysis and projecting the reductions to the prescribed teeth.

4. A method (A) as in claim 1, comprising the further steps of facilitating the evaluation of said digital dental models by storing and sharing the digital models.

5. A method (A) as in claim 1, comprising the further step of providing a digital archival service for storage and archiving the physical or digital models for future reference of corrected prescribed patients and that are available through a secure site.

6. A method (A) as in claim 1, further comprising the step of creating a secure system for transferring the results of the physical and digital analysis so that any treatment parameters can be accessed only as authorized.

7. A method (A) as in claim 1, wherein the teeth are measured using digital calipers in step b.

8. A process (B) in claim 1 where when said tray is provided with a removable label that shows the intended use date or other indicia.

## Patentansprüche

1. Verfahren zur orthodontischen Korrektur fehlgestellter Zähne, bei dem es sich entweder handelt um
(A) ein Verfahren, umfassend die Schritte
a. Anfertigen eines Abdrucks oder Scans der Patientenzähne, welcher verwendet wird, um eine 3D-digitale oder positive Form der Originalzähne zu erzeugen, das **gekennzeichnet ist durch** die Schritte eines
b. Versenden von Form/Abdruck/Scan an ein Labor, das die Zähne und die Gesamtbreite jedes Zahnbogens, sowie Zahn- und Zahnbogenabweichungen vermisst, und Größenverteilungen berechnet;
c. Bestimmung von Beeinträchtigungen des Wegs der Zahnbewegung, die **durch** Schmelzreduktion aufgelöst werden müssen;
d. Bestimmung, welche Zähne solche Zähne sind, die in jedem Bogen reduziert werden müssen, um Beeinträchtigungen aufzulösen;
e. digitales oder physisches Entfernen der vorgeschlagenen Reduktionen von den vorbestimmten Zähnen und Erzeugen eines Basisliniennormiermodells und von Schienen;
f. Verwenden eines CAD- oder manuellen Systems zur Bestimmung der gewünschten Zahnpositionierung der vorgeschriebenen Bögen;
g. Schneiden der Zähne auf dem vorgeschriebenen Modell und deren Anordnung in eine ideale vorgeschriebene Position;
h. Erzeugung eines idealen vorgeschriebenen Endmodells und mindestens eines vorgeschriebenen Fortschrittsmodells; oder bei dem es sich handelt um
(B) ein Verfahren zur orthodontischen Korrektur von fehlgestellten Zähnen eines Patienten **durch** eine Fachkraft, umfassend die Schritte
a. Anfertigung eines Ausgangsscans oder eines Dentalabdrucks der Fehlokklusion des Patienten, verwendbar zur Erzeugung eines 3D digital- oder positiven physischen Modells; das **gekennzeichnet ist durch** die Schritte
b. einer Verwendung eines Computeranalyseprogramms, um den Zahn sowie die Zahnbogenweite zu bestimmen und Berechnung von Abweichungen, bei denen eine Schmelzreduktion zunächst indiziert ist;
c. Digitale oder physische Reduktion des Schmelzes, um Bogen- und Zahnabweichungen zu korrigieren und um Beeinträchtigungen aufzulösen;
d. Verwendung eines Ausgangsmodells, um digital ein ideales vorgeschriebenes Modell unter Verwendung eines CAD Systems oder **durch** Herstellung eines physischen Modells zu erzeugen;
e. digitale oder physische Verwendung einer Weganalyse, um zwischenliegende digitale oder physische Modelle, wie benötigt, zu bestimmen;
f. Versenden der digitalen Originale, vorgeschriebenen Schmelzreduktionsstellen und -größen, Bogen- und Zahnanalyse, vorgeschriebenes Ausgangsmodell und jegliche zwischenliegende Modelle oder physischen Modelle, sowie das vorgeschriebene Endmodell an einen Dentaldienstleister als Bezugspunkt, Input und zur Freigabe;
g. Erzeugung von Schienen unter Verwendung der vorgeschriebenen Modelle aus einer elastischen polymeren Substanz, die schließlich verwendet werden, um die Fehlstellungen zu korrigieren, mit Ausnahme von Verfahren zur Behandlung des menschlichen Körpers **durch** Operationen.

2. Verfahren (A) nach Anspruch 1, umfassend ein digitales Scannen eines Abdrucks, um ein digitales Modell zu erzeugen, das verwendet wird, um ein physisches Modell über eine 3D Modellierausrüstung zu erzeugen.

3. Verfahren (A) nach Anspruch 1, wobei ein CAD System den Digitalscan aufnimmt und bestimmt, wo Wegüberschneidungen vorliegen und berechnet die ideale Methode zu deren Auflösung unter Verwendung von digitalen Messtastern und Software zur Zahnanalyse sowie Projektion der Reduktionen auf die verschriebenen Zähne.

4. Verfahren (A) nach Anspruch 1, umfassend die weiteren Stufen einer Erleichterung der Evaluierung der digitalen Dentalmodelle durch Speichern und Teilen der digitalen Modelle.

5. Verfahren (A) nach Anspruch 1, umfassend den weiteren Schritt einer Bereitstellung eines digitalen Archivservices zur Speicherung und Archivierung der physischen oder digitalen Modelle zur zukünftigen Bezugnahme von korrigierten Patienten und die zugänglich sind durch eine sichere Site.

6. Verfahren (A) nach Anspruch 1, ferner umfassend die Stufe einer Erzeugung eines sicheren Systems zur Übertragung der Ergebnisse der physischen und digitalen Analyse, so dass jegliche Behandlungsparameter lediglich Autorisierten zugänglich sind.

7. Verfahren (A) nach Anspruch 1, wobei die Zähne unter Verwendung von digitalen Messschiebern in Stufe b vermessen werden.

8. Verfahren (B) nach Anspruch 1, wobei wenn die Schiene bereitgestellt wird mit einem entfernbaren Label, das das beabsichtigte Verwendungsdatum oder andere Angaben zeigt.

## Revendications

1. Procédé destiné à corriger de manière orthodontique des dents en malposition qui est soit
(A) un procédé comprenant l'étape qui consiste
a. à réaliser une empreinte ou un balayage des dents du patient, qui est utilisé(e) pour créer un moule positif ou numérique en 3D des dents originales, qui est **caractérisé par** les étapes qui consistent :
b. à envoyer ledit moule/impression/balayage à un laboratoire qui mesure les dents et la largeur totale de chaque arcade et qui calcule la distribution de la taille et des irrégularités des dents et des arcades ;
c. à déterminer où se trouvent des interférences de trajctoire au mouvement des dents qui doivent être résolues par une réduction de l'émail ;
d. à déterminer quelles dents doivent être réduites dans chaque arcade pour éliminer les interférences ;
e. à retirer physiquement ou numériquement les réductions proposées des dents prescrites et à créer un modèle normatif de ligne de base et des porte-empreintes ;
f. à utiliser un système manuel ou de CAO pour déterminer le positionnement souhaité des dents des arcades prescrites ;
g. à couper les dents suivant le modèle prescrit et à les disposer dans une position prescrite idéale ; et
h. à créer un modèle prescrit final idéal et au moins un modèle de progression prescrit ; ou qui est
(B) un procédé pour corriger de manière orthodontique des dents en malposition d'un patient par un dentiste comprenant les étapes qui consistent
a. à réaliser un balayage initial ou une impression dentaire de la malocclusion du patient que l'on peut utiliser pour créer un modèle physique positif ou numérique en 3D ; qui est **caractérisé par** les étapes qui consistent
b. à utiliser un programme d'analyse informatique pour déterminer les largeurs des arcades et des dents et pour calculer toute irrégularité où une réduction de l'émail est d'abord indiquée ;
c. à réduire physiquement ou numériquement ledit émail afin de corriger les irrégularités des arcades et des dents et à éliminer toute interférence ;
d. à utiliser le modèle initial pour créer numériquement un modèle prescrit idéal en utilisant un système de CAO ou en préparant un modèle physique ;
e. à utiliser une analyse de trajectoire de manière physique ou numérique pour déterminer des modèles physiques ou numériques intermittents selon le besoin ;
f. à envoyer les tailles et sites de réduction de l'émail prescrites, originales numériques, l'analyse des arcades et des dents, le modèle prescrit initial, et tous modèles intermittents ou modèles physiques, et le modèle prescrit final au dentiste à titre de référencement, entrée et approbation ; et,
g. à créer des porte-empreintes en utilisant les modèles prescrits à partir d'une substance polymère élastique qui va être utilisée pour corriger la malocclusion,
à l'exception d'un procédé de traitement du corps humain par chirurgie.

2. Procédé (A) selon la revendication 1, comprenant le fait de balayer numériquement une empreinte afin de créer un modèle numérique qui sera utilisé pour créer un modèle physique à l'aide d'un équipement de modelage 3D.

3. Procédé (A) selon la revendication 1 où un système de CAO prend le balayage numérique et détermine où se trouvent les interférences de trajectoire et calcule le procédé idéal pour les éliminer en utilisant des compas numériques et un logiciel pour analyse dentaire et pour projeter les réductions aux dents prescrites.

4. Procédé (A) selon la revendication 1, comprenant les étapes supplémentaires qui consistent à faciliter l'évaluation desdits modèles dentaires numériques en stockant et en partageant les modèles numériques.

5. Procédé (A) selon la revendication 1, comprenant l'étape supplémentaire qui consiste à prévoir un service d'archives numériques pour stocker et archiver les modèles physiques ou numériques dans le but d'un référencement futur de patients prescrits corrigés et qui sont disponibles via un site sécurisé.

6. Procédé (A) selon la revendication 1, comprenant en outre l'étape qui consiste à créer un système sécurisé pour transférer les résultats des analyses physiques et numériques de sorte à pouvoir accéder à tous paramètres de traitement, uniquement sur autorisation.

7. Procédé (A) selon la revendication 1, dans lequel les dents sont mesurées en utilisant des compas numériques à l'étape b.

8. Processus (B) dans la revendication 1 où, ledit porte-empreinte est doté d'une étiquette décollable qui affiche la date prévue d'utilisation ou d'autres indices.
